(19) Europäisches Patentamt
European Patent Office
Office européen des brevets

(11) **EP 3 496 392 A1**

(12) **EUROPEAN PATENT APPLICATION**

(43) Date of publication:
**12.06.2019 Bulletin 2019/24**

(51) Int Cl.:
*H04N 5/335* (2011.01)    *H04N 5/357* (2011.01)
*H04N 5/225* (2006.01)    *G01T 1/29* (2006.01)

(21) Application number: **18196240.8**

(22) Date of filing: **24.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2017   US 201715835813**

(71) Applicant: **Nokia Technologies Oy**
**02610 Espoo (FI)**

(72) Inventor: **JIANG, Hong**
**Monroe Township, NJ 08831 (US)**

(74) Representative: **Nokia EPO representatives**
**Nokia Technologies Oy**
**Karaportti 3**
**02610 Espoo (FI)**

(54) **COMPLEMENTARY APERTURES TO REDUCE DIFFRACTION EFFECT**

(57)    An method is provided including determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements; performing a measurement for each respective aperture pattern in the first set and in the second set by changing a property associated with one or more of the plurality of aperture elements in accordance with the respective aperture pattern; and processing the performed measurements to extract information about an image.

Fig. 1

**EP 3 496 392 A1**

**Description**

TECHNICAL FIELD

This invention relates generally to imaging systems and, more specifically, relates to reducing diffraction effects in computational imaging systems.

BACKGROUND

This section is intended to provide a background or context to the invention disclosed below. The description herein may include concepts that could be pursued, but are not necessarily ones that have been previously conceived, implemented or described. Therefore, unless otherwise explicitly indicated herein, what is described in this section is not prior art to the description in this application and is not admitted to be prior art by inclusion in this section.

Compressive imaging is a technique of imaging that utilizes a sensor and an aperture. The aperture modulates light from objects to pass on to the sensor, and the sensor collects the light and measures the intensity. These measurements are usually made using apertures that can be programed to create different patterns. When the programmable elements of the aperture become small, as in the case when resolution of the image is increased, the aperture can cause significant diffractions which degrade the quality of images. Traditionally, the diffraction effect places a limit on how small the aperture elements can be, before images quality becomes too poor to be useful. This limit is called the diffraction limit.

BRIEF SUMMARY

This section is intended to include examples and is not intended to be limiting.

In an example of an embodiment, a method is disclosed that includes determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements; performing a measurement for each respective aperture pattern in the first set and in the second set by changing a property associated with one or more of the plurality of aperture elements in accordance with the respective aperture pattern; and processing the performed measurements to extract information about an image.

An additional example of an embodiment includes a computer program, comprising code for performing the method of the previous paragraph, when the computer program is run on a processor. The computer program according to this paragraph, wherein the computer program is a computer program product comprising a computer-readable medium bearing computer program code embodied therein for use with a computer.

An example of an apparatus includes one or more processors and one or more memories including computer program code. The one or more memories and the computer program code are configured to, with the one or more processors, cause the apparatus to perform at least the following: determine a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements; perform a measurement for each respective aperture pattern in the first set and in the second set by changing a property associated with one or more of the plurality of aperture elements in accordance with the respective aperture pattern; and process the performed measurements to extract information about an image.

An example of an apparatus includes means for determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements; means for performing a measurement for each respective aperture pattern in the first set and in the second set by changing a property associated with one or more of the plurality of aperture elements in accordance with the respective aperture pattern; and means for processing the performed measurements to extract information about an image.

BRIEF DESCRIPTION OF THE DRAWINGS

In the attached Drawing Figures:

FIG. 1 is a block diagram of one possible and non-limiting exemplary system in which the exemplary embodiments may be practiced;

FIG. 2 is a diagram illustrating an example computational imaging system performing measurements to capture a scene and a resulting digital image;

FIG. 3 is a diagram illustrating an example of different patterns used by an aperture assembly of a computational imaging system for compressive measurements in accordance with exemplary embodiments;

FIG. 4 is a diagram illustrating an example ray starting from a point on a scene, passing through a point on the aperture assembly, and ending at the sensor in accordance with exemplary embodiments;

FIG. 5 is diagram showing geometry of a diffraction integral in accordance with exemplary embodiments; and

FIG. 6 is a logic flow diagram for complementary apertures to reduce diffraction effect, and illustrates the operation of an exemplary method or methods, a result of execution of computer program instructions embodied on a computer readable memory, functions performed by logic implemented in hardware, and/or interconnected means for performing functions in accordance with exemplary embodiments.

DETAILED DESCRIPTION

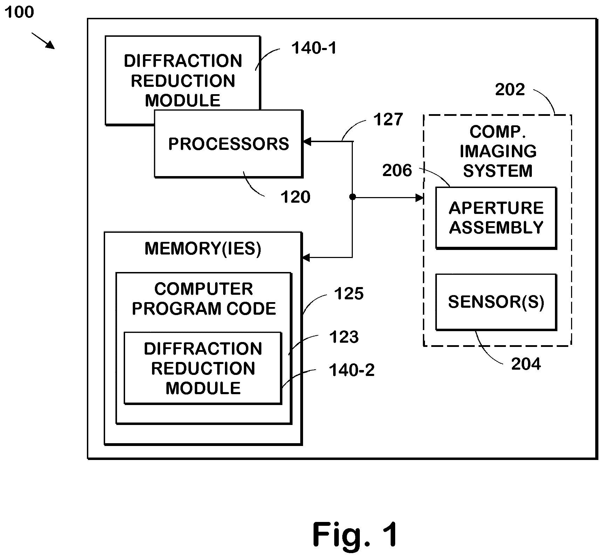

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.
The exemplary embodiments herein describe techniques for complementary apertures to reduce diffraction effect. Additional description of these techniques is presented after a system into which the exemplary embodiments may be used is described.
Turning to FIG. 1, this figure shows a block diagram of one possible and non-limiting exemplary system 100 in which the exemplary embodiments may be practiced. In FIG. 1, the system 100 includes one or more processors 120, one or more memories 125, and a computational imaging system 202 interconnected through one or more buses 127. The one or more buses 127 may be address, data, or control buses, and may include any interconnection mechanism, such as a series of lines on a motherboard or integrated circuit, fiber optics or other optical communication equipment, and the like.
In some embodiments, the computational imaging system 202 may be physically separate from the system 100. According to such embodiments, the computational imaging system 202 may be configured to transmit sensor data from the sensor(s) 204 to the system 100 through any suitable wired interface (such as a universal serial bus interface for example) and/or wireless interface (such as a BLUETOOTH interface, a near field communications (NFC) interface, or a Wi-Fi interface for example).
The computational imaging system 202 includes a sensor 204, such a photovoltaic sensor for example and an aperture assembly 206. The aperture assembly 206 may be a programmable two dimensional array of aperture elements, where each element may be controlled individually. The computational imaging system 202 may be a 'lensless' imaging system or may include a lens, which for simplicity is not shown in the diagram. In accordance with exemplary embodiments, the computational imaging system 202 may be used for different spectra, such as infrared, millimeter (mm) wave, and terahertz (THz) wave for example. Thus, the sensor(s) 204 may be any sensor that is sensitive/responsive to the respective wave intensity, and the aperture assembly 206 may be made with any suitable material that is programmable to change transmittance and/or reflectance of waves at the respective wavelengths, such as meta-materials for example.
The one or more memories 125 include computer program code 123. The system 100 includes a diffraction reduction module, comprising one of or both parts 140-1 and/or 140-2, which may be implemented in a number of ways. The diffraction reduction module may be implemented in hardware as diffraction reduction module 140-1, such as being implemented as part of the one or more processors 120. The diffraction reduction module 140-1 may be implemented also as an integrated circuit or through other hardware such as a programmable gate array. In another example, the diffraction reduction module 140 may be implemented as diffraction reduction module 140-2, which is implemented as computer program code 123 and is executed by the one or more processors 120. For instance, the one or more memories 125 and the computer program code 123 may be configured to, with the one or more processors 120, cause the system 100 to perform one or more of the operations as described herein.
The computer readable memories 125 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125 may be means for performing storage functions. The processors 120 may be of any type suitable to the local technical environment, and may include one or more of general purpose computers, special purpose computers, microprocessors, digital signal processors (DSPs) and processors based on a multi-core processor architecture, as non-limiting examples. The processors 120 may be means for performing functions, such as controlling the system 100 and other functions as described herein.

In general, the various embodiments of the system 100 can include, but are not limited to, cellular telephones such as smart phones, tablets, personal digital assistants (PDAs) having wireless communication capabilities, computers having wireless communication capabilities including portable computers, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the exemplary embodiments of this invention, the exemplary embodiments will now be described with greater specificity. More specifically, examples of a computational imaging architecture, compressive measurements techniques, and an image reconstruction process to reduce diffraction in the computational imaging architecture are discussed in more detail below.

### Computational Imaging Architecture

Computational imaging systems, in particular compressive imaging systems, typically include two components: an aperture assembly and a sensor. Although not specifically shown in the figures, those skilled in the art will appreciate that other components may also be included in a computational imaging systems, such as lenses or shutters for example. The aperture assembly is made up of a two dimensional array of aperture elements. A property of each of the aperture elements may be individually controlled, such as a transmittance of each aperture element, $T_{ij}$. This should not be seen as limiting and other properties are also possible, such as controlling a reflectance, or an absorptance, of each of the aperture elements for example. The sensor may be a single detection element, which is ideally of an infinitesimal size. A computational imaging system may also include more than one sensor.

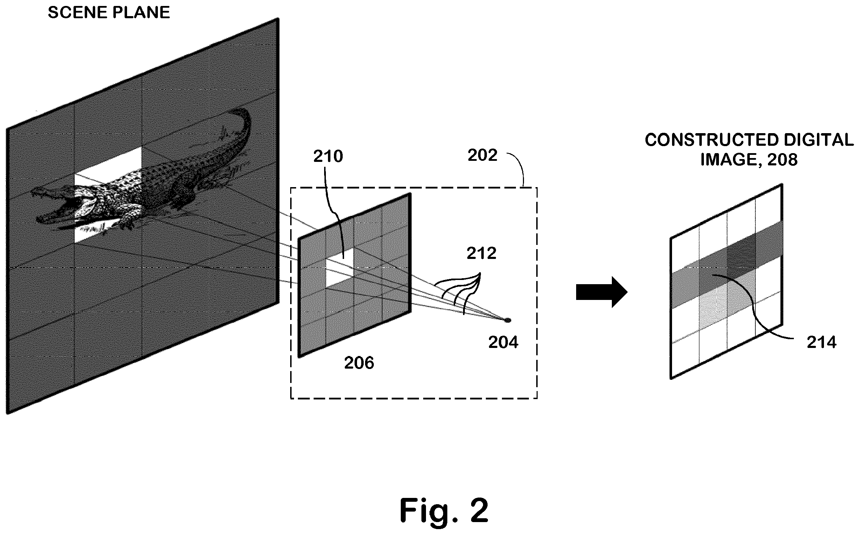

Referring now to FIG. 2, this figure shows a diagram of a computational imaging for capturing a scene in accordance with exemplary embodiments. In particular, a computational imaging system 202 is shown having a single sensor 204 and an aperture assembly 206 that may be used to perform measurements. A scene can be captured by using the sensor 204 to take as many measurements as the number of pixels in a resulting image. For example, each measurement can be made from reading of the sensor when one of the aperture elements is completely open and all others are completely closed, which corresponds to the binary transmittance $T_{ij} = 1$ (open), or 0 (closed). In the example shown in FIG. 2, the aperture array 206 includes an array of sixteen programmable aperture elements. The measurements are the pixel values of the image when the elements of the aperture assembly are opened one by one in a certain scan order. For simplicity, the aperture assembly 206 in FIG. 2 includes fifteen closed elements represented by darker shading and one open element 210. Each element of the aperture assembly 206, together with the sensor 204, defines a cone of a bundle of rays (represented in FIG. 2 by rays 212) and the cones from all aperture elements are defined as pixels of an image. The integration of the rays within a cone is defined as a pixel value of the image. An image is defined by the pixels which correspond to the array of aperture elements in the aperture assembly. Thus, for example, an image 208 may be reconstructed such that pixel 214 corresponds to corresponds to the open array element 210 as shown in FIG. 2.

### Compressive Measurements

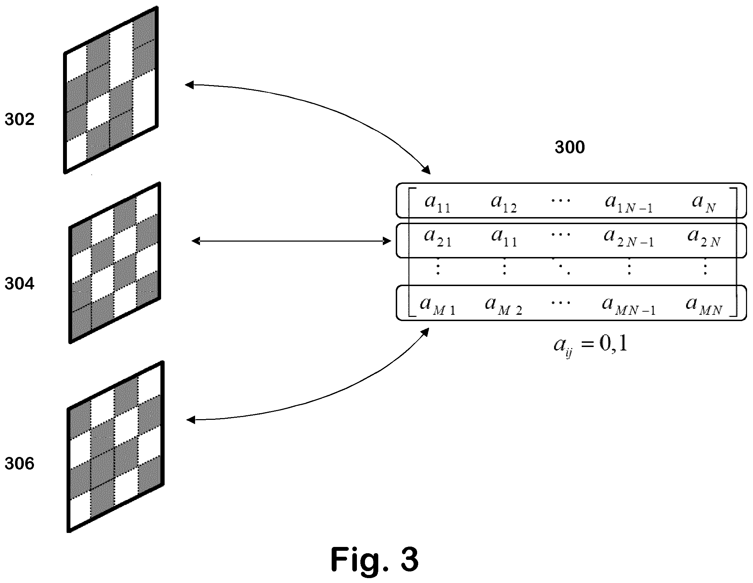

Referring now to FIG. 3, this figure shows an example sensing matrix which is used to for performing compressive measurements by opening different patterns of aperture elements according to the sensing matrix. Using such a technique allows an image to be represented by using fewer measurements than opening each aperture element individually. Each row of the sensing matrix 300 defines a pattern for the elements of the aperture assembly (such as aperture assembly 206 for example), and the number of columns in a sensing matrix 200 is equal to the number of total elements in the aperture assembly. In the context of compressive sensing, the two-dimensional array of aperture elements in the aperture assembly is conceptually rearranged into a one dimensional array, which can be done, for example, by ordering the elements of the aperture assembly one by one in certain scan order. Each value in a row of the sensing matrix is used to define the transmittance of an element of the aperture assembly. A row of the sensing matrix therefore completely defines a pattern for the aperture assembly. In FIG. 3, three different example patterns 302, 304, 306 are shown that are defined by different rows of the sensing matrix 300. This allows the sensor to make one measurement for the given pattern of the aperture assembly. The number of rows of the sensing matrix corresponds to the number of measurements, which is usually much smaller than the number of aperture elements in the aperture assembly (i.e. the number of pixels).

According to exemplary embodiments, a sequence of patterns may be determined based on a sensing matrix (such as sensing matrix 300 for example). For example, let the sensing matrix be a random matrix whose entries are random numbers between 0 and 1. To make a measurement, the transmittance, $T_{ij}$, of each aperture element is controlled to equal the value of the corresponding entry in a row of the sensing matrix. The sensor integrates all rays transmitted through the aperture assembly. The intensity of the rays is modulated by the transmittances before they are integrated. Therefore, each measurement from the sensor is the integration of the intensity of rays through the aperture assembly multiplied by the transmittance of respective aperture element. A measurement from the sensor is hence a projection of the image onto the row of the sensing matrix. By changing the pattern of the transmittance of the aperture assembly, it is possible to make compressive measurements corresponding to a given sensing matrix whose entries have real values between 0 and 1.

In general, these measurements may be used to extract information about the image. As shown below, information may be extracted that relates to pixels of the image. In some example embodiments, the information about the pixels may then be used to reconstruct an image (or series of images such as the case may be for a video) and store the image and/or video as a file in a suitable format (such as a JPEG, TIFF, GIF, AVI, MP4, or MOV format for example). Alternatively or additionally, information may be extracted to detect anomalies in the image (such as described in US 9,600,899 for example).

### *Reconstruction of Image*

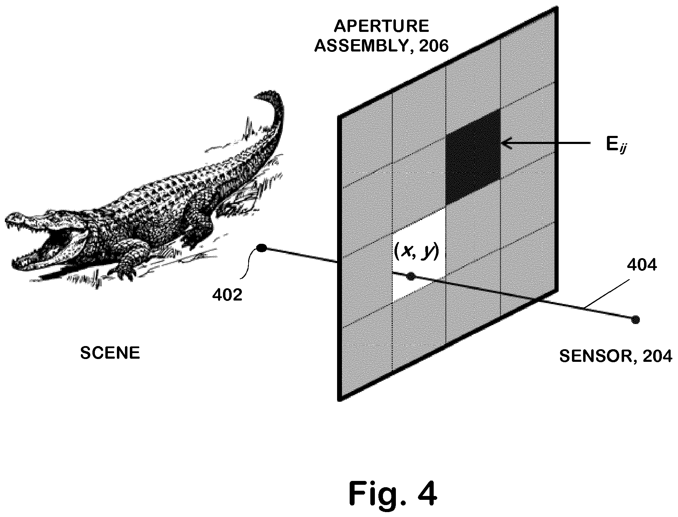

A pixelized image can be reconstructed from the measurements taken from the sensor. Referring to FIG. 4, to form an image let the aperture assembly be a rectangular region on a plane with $(x,y)$ coordinate system. For each point, $(x,y)$, on the aperture assembly 206, there is a ray 404 starting from a point 402 on the scene, passing through the point $(x,y)$, and ending at the sensor 204 for example. Accordingly, there is a unique ray associated with each point $(x,y)$ on the aperture assembly 206, and its intensity arriving at the aperture assembly 206 at time t may be denoted by $r(x,y;t)$. Then an image $I(x,y)$ of the scene may be defined as the integration of the ray in a time interval $\Delta t$:

$$I(x,y) = \int_0^{\Delta t} r(x,y;t)dt \;. \tag{1}$$

In contrast to traditional imaging systems, there is not an actual image physically formed. Rather, the definition of an image in (1) is defined on the region of the aperture assembly. For this reason, the image of (1) may be referred to as a virtual image. A virtual image $I(x,y)$ can be considered as an analog image because it is continuously defined in the region of the aperture assembly. Let the transmittance of the aperture assembly be defined as $T(x,y)$. A measurement made by the sensor is the integration of the rays through the aperture assembly modulated by the transmittance, and normalized with the area of the aperture assembly. This measurement is given by:

$$z_T = \frac{1}{a} \iint T(x,y)I(x,y)dxdy \;. \tag{2}$$

In Equation (2), $a$ is the area of the aperture assembly. Although the virtual image discussed above is defined on the plane of the aperture assembly, it is not necessary to do so. The virtual image may be defined on any plane that is placed in between the sensor and the aperture assembly and parallel to the aperture assembly.

The virtual image defined by Equation (1) can be pixelized by the aperture assembly. Let the region defined by one aperture element be denoted by $E_{ij}$ as shown in FIG. 4. Then the pixel value of the image at the pixel $(i,j)$ is the integration of the rays passing through the aperture element $E_{ij}$, normalized by the area of the aperture assembly, $a$. The pixel value is given by:

$$I(i,j) = \frac{1}{a} \iint_{E_{ij}} I(x,y)dxdy,$$
$$= \frac{1}{a} \iint \mathbf{1}_{E_{ij}}(x,y)I(x,y)dxdy. \tag{3}$$

In Equation (3), the function $\mathbf{1}_{E_{ij}}$ is the characteristic function of the aperture element $E_{ij}$. The characteristic function of a region $R$ is defined as:

$$\mathbf{1}_R(x,y) = \begin{cases} 1, & (x,y) \in R \\ 0 & (x,y) \notin R \end{cases}. \tag{4}$$

Note that *I(i,j)* is used to denote a pixelized image of a virtual image *I(x,y)* which is analog.

Equation (3) defines the pixelized image *I(i,j)*. In compressive sensing, it is often mathematically convenient to reorder a pixelized image which is a two dimensional array into a one dimensional vector. To do so, let *q* be a mapping from a 2D array to a 1D vector defined by:

$$q : (i,j) \mapsto n, \text{ so that } I_n = I(i,j). \tag{5}$$

Then the pixelized image *I(i, j)* can be represented as a vector whose components are $I_n$. For simplicity, *I* is used to denote the pixelized image either as a two dimensional array or a one dimensional vector, interchangeably.

When the aperture assembly is programmed to implement a compressive sensing matrix, the transmittance $T_{ij}$ of each aperture element is controlled to equal the value of the corresponding entry in the sensing matrix. For the *m*th measurement, the entries in row *m* of the sensing matrix are used to program the transmittance of the aperture elements. Specifically, let the sensing matrix *A* be a random matrix whose entries, $a_{mn}$, are random numbers between 0 and 1.

Let $T_{ij}^m(x,y)$ be the transmittance of aperture element $E_{ij}$ for the *m*th measurement. Then, for the *m*th measurement, the transmittance of the aperture assembly is given by:

$$T^m(x,y) = \sum_{i,j} T_{ij}^m(x,y), \text{ where}$$
$$T_{ij}^m(x,y) = a_{m,q(i,j)}\mathbf{1}_{E_{ij}}(x,y). \tag{6}$$

Therefore, according to Equation (2), the measurements are given by:

$$\begin{aligned} z_m &= \frac{1}{a}\iint T^m(x,y)I(x,y)dxdy, \\ &= \frac{1}{a}\sum_{i,j}\iint T_{ij}^m(x,y)I(x,y)dxdy, \\ &= \sum_{i,j} a_{m,q(i,j)}\frac{1}{a}\iint \mathbf{1}_{E_{ij}}(x,y)I(x,y)dxdy, \\ &= \sum_{i,j} a_{m,q(i,j)}I(i,j). \end{aligned} \tag{7}$$

Equation (7) is the familiar form of compressive measurements if the pixelized image *I(i, j)* is reordered into a vector by the mapping *q*. Indeed, in the vector form, Equation (7) is tantamount to:

$$z_m = \sum_{i,j} a_{m,q(i,j)}I(i,j) = \sum_n a_{mn}I_n, \text{ or}$$
$$z = A \cdot I. \tag{8}$$

In Equation (8), z is the measurement vector, *A* is the sensing matrix and *I* is the vector representation of the pixelized image *I(i, j)* . It is known that the pixelized image *I* can be reconstructed from the measurements *z* by, for example, solving the following minimization problem:

$$\min \left\| W \cdot I \right\|_1, \text{ subject to } A \cdot I = z, \qquad (9)$$

where $W$ is some sparsifying operator such as total variation or framelets.

***Diffraction Analysis***

Equation (8) is ideal in the sense that light travels in straight lines without diffraction. In reality, a diffraction effect exists due to interaction of light wave with an obstacle such as an aperture in Fig 3. When the number of aperture elements is large, the diffraction effect become significant so that Equation (8) is no longer an accurate relationship between the measurements and the pixels. Solving Equation (8) directly, for example by using the method of Equation (9), in the presence of diffraction will result in blurring in the reconstructed image. Therefore, more accurate equations than Equation (8) are needed for the measurements and the pixels to take into consideration of the diffraction effect.

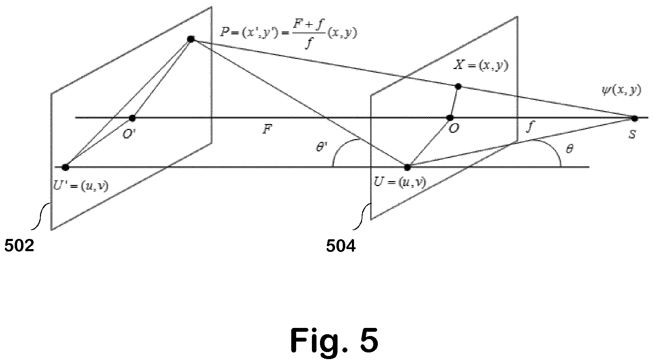

The diffraction effect can be characterized based on the scaler theory of diffraction. Referring to FIG. 5, when a point source is located at point $P$, the diffraction wave amplitude at point S caused by the aperture is given by the Kirchhoff or Fresnel-Kirchhoff diffraction formula:

$$\psi = \frac{-ik_0 a_P}{2\pi} \iint_E \frac{\sqrt{T(u,v)}}{\overline{PU} \cdot \overline{US}} e^{ik_0(\overline{PU}+\overline{US})} \left( \frac{\cos\theta + \cos\theta'}{2} \right) dudv \qquad (10)$$

In Equation (10), $a_p$ is the strength of the point source at point P on the object plane 502, $k_0$ is the wave number of the light source; $T(u,v)$ is the transmittance of the aperture, $\overline{PU}$, $\overline{US}$ are the distances between points $P, U$ , and $U, S$ as shown in FIG. 5, respectively; and $\theta, \theta$ are the angles of $\overline{US}$ and $\overline{PU}$, with respect to the normal direction of the aperture plane 504, respectively.

From FIG. 5, we can compute the quantities in Equation (10) as follows.

$$\overline{US} = \sqrt{f^2 + u^2 + v^2}$$

$$\cos\theta = \sin\left(\frac{\pi}{2} - \theta\right) = \frac{f}{US} = \frac{f}{\sqrt{f^2 + u^2 + v^2}}$$

$$\overline{PU} = \sqrt{F^2 + \left(\frac{F+f}{f}x - u\right)^2 + \left(\frac{F+f}{f}y - v\right)^2} \qquad (11)$$

$$\cos\theta' = \frac{F}{PU} = \frac{F}{\sqrt{F^2 + \left(\frac{F+f}{f}x - u\right)^2 + \left(\frac{F+f}{f}y - v\right)^2}}$$

Since the point P is uniquely determined by point $X = (x,y)$ on the aperture plane 504, wave amplitude $\psi = \psi(x,y)$ can be written as (with $a_P$ replaced by $a(x,y)$):

$$\psi(x,y) = \frac{-ik_0 a(x,y)}{2\pi d(x,y)} \iint_E \sqrt{T(u,v)} K(x,y,u,v) dudv \qquad (12)$$

where

$$d(x,y) = \frac{F+f}{f}\sqrt{f^2 + x^2 + y^2}$$

$$K(x,y,u,v) = \frac{\dfrac{F+f}{f}\sqrt{f^2 + x^2 + y^2}\, e^{ik_0\left(\sqrt{f^2+u^2+v^2} + \sqrt{F^2 + \left(\frac{F+f}{f}x - u\right)^2 + \left(\frac{F+f}{f}y - v\right)^2}\right)}}{\sqrt{f^2 + u^2 + v^2}\sqrt{F^2 + \left(\dfrac{F+f}{f}x - u\right)^2 + \left(\dfrac{F+f}{f}y - v\right)^2}}$$

$$\cdot \frac{\dfrac{f}{\sqrt{f^2 + u^2 + v^2}} + \dfrac{F}{\sqrt{F^2 + \left(\frac{F+f}{f}x - u\right)^2 + \left(\frac{F+f}{f}y - v\right)^2}}}{2}$$

$$= \frac{\dfrac{F+f}{f}\sqrt{f^2 + x^2 + y^2}\, e^{ik_0\left(\sqrt{f^2+u^2+v^2} + \sqrt{F^2 + \left(\frac{F+f}{f}x - u\right)^2 + \left(\frac{F+f}{f}y - v\right)^2}\right)}}{2\left(f^2 + u^2 + v^2\right)\left(F^2 + \left(\dfrac{F+f}{f}x - u\right)^2 + \left(\dfrac{F+f}{f}y - v\right)^2\right)}$$

$$\cdot \left( f\sqrt{F^2 + \left(\frac{F+f}{f}x - u\right)^2 + \left(\frac{F+f}{f}y - v\right)^2} + F\sqrt{f^2 + u^2 + v^2} \right) \tag{13}$$

The intensity measured by the sensor from a point source is therefore given by:

$$|\psi(x,y)|^2 = \frac{k_0^2 a^2(x,y)}{4\pi^2 d^2(x,y)} \iint_E \sqrt{T(s,t)}K^*(x,y,s,t)\,dsdt \iint_E \sqrt{T(u,v)}K(x,y,u,v)\,dudv \tag{14}$$

Recall the definition of the analog image given by (1), we equate $I(x, y)$ as the strength of the point source P:

$$I(x,y) = \frac{k_0^2 a^2(x,y)}{4\pi^2 d^2(x,y)} \tag{15}$$

Then the intensity measured by the sensor from a point source is therefore given by:

$$|\psi(x,y)|^2 = I(x,y)\iint_E \sqrt{T(s,t)}K^*(x,y,s,t)\,dsdt \iint_E \sqrt{T(u,v)}K(x,y,u,v)\,dudv \tag{16}$$

Now the measurement due to the pattern $T(x,y)$ for the entire scene is the integration of $|\psi(x, y)|^2$ over the entire aperture $E$, because it is assumed the light from different points on the scene is incoherent. Therefore, the measurement $z_T$ by using the pattern $T(x,y)$ is given by:

$$z_T = \iint_E |\psi(x,y)|^2 \, dxdy$$
$$= \iint_E I(x,y)dxdy \iint_E \sqrt{T(s,t)}K^*(x,y,s,t)dsdt \iint_E \sqrt{T(u,v)}K(x,y,u,v)dudv$$
$$= \iint_E I(x,y)\kappa_T(x,y)dxdy, \text{ where} \tag{17}$$
$$\kappa_T(x,y) = \iint_E \sqrt{T(s,t)}K^*(x,y,s,t)dsdt \iint_E \sqrt{T(u,v)}K(x,y,u,v)dudv$$

We now consider the aperture assembly by an array of elements, and a row of a sensing matrix is used to define $T(x,y)$ as given by Equation (6). Then:

$$\kappa_m(x,y) = \kappa_{T^m}(x,y) = \iint_E \sqrt{T^m(s,t)}K^*(x,y,s,t)dsdt \iint_E \sqrt{T^m(u,v)}K(x,y,u,v)dudv$$
$$= \sum_{i,j,k,l} \iint_{E_{ij}} \sqrt{T_{ij}^m(s,t)}K^*(x,y,s,t)dsdt \iint_{E_{kl}} \sqrt{T_{kl}^m(u,v)}K(x,y,u,v)dudv \tag{18}$$
$$= \sum_{i,j,k,l} \sqrt{a_{m,q(i,j)}a_{m,q(k,l)}} \iint_{E_{ij}} K^*(x,y,s,t)dsdt \iint_{E_{kl}} K(x,y,u,v)dudv$$

$$z_m = \iint_E I(x,y)\kappa_m(x,y)dxdy$$
$$= \sum_{i,j,k,l} \sqrt{a_{m,q(i,j)}a_{m,q(k,l)}} \iint_E I(x,y)dxdy \iint_{E_{ij}} K^*(x,y,s,t)dsdt \iint_{E_{kl}} K(x,y,u,v)dudv \tag{19}$$
$$= \sum_{i,j,k,l} \sqrt{a_{m,q(i,j)}a_{m,q(k,l)}} \iint_{E_{kl}} dudv \iint_{E_{ij}} dsdt \iint_E K(x,y,u,v)K^*(x,y,s,t)I(x,y)dxdy$$

Equation (19) provides a relationship between the measurements $z_m$ and the analog image $I(x,y)$, and can be used to reconstruct super-resolution image.

The image is pixelized using the same resolution as the aperture elements, so that $I(x,y)$ is represented by a piecewise constant function over the aperture elements

$$I(x,y) = \sum_{i,j} I(i,j)\mathbf{1}_{E_{ij}}(x,y) \tag{20}$$

For pixelized image, the measurements can be found by substituting Equation (20) into Equation (19), and they are given by

$$z_m = \sum_{i,j,k,l} \sqrt{a_{m,q(i,j)}a_{m,q(k,l)}} \iint_{E_{kl}} dudv \iint_{E_{ij}} dsdt \iint_E K(x,y,u,v)K^*(x,y,s,t)I(x,y)dxdy$$
$$= \sum_{i,j,k,l,p,r} \sqrt{a_{m,q(i,j)}a_{m,q(k,l)}} I(p,r) \iint_{E_{kl}} dudv \iint_{E_{ij}} dsdt \iint_{E_{p,r}} K(x,y,u,v)K^*(x,y,s,t)dxdy$$
$$= \sum_{i,j,k,l,p,r} \sqrt{a_{m,q(i,j)}a_{m,q(k,l)}} \kappa(i,j,k,l,p,r)I(p,r), \text{ where} \tag{21}$$
$$\kappa(i,j,k,l,p,r) = \iint_{E_{kl}} dudv \iint_{E_{ij}} dsdt \iint_{E_{p,r}} K(x,y,u,v)K^*(x,y,s,t)dxdy$$

Now we use the equivalent vector form for so that:

$$I = \begin{bmatrix} I_1, \dots, I_N \end{bmatrix}, I_{q(i,j)} = I(i,j)$$
$$\kappa_{q(i,j)q(k,l)q(p,r)} = \kappa(i,j,k,l,p,r) \tag{22}$$

The measurements are given by:

$$z_m = \sum_{i,j,k} \sqrt{a_{mi}a_{mj}}\, \kappa_{ijk} I_k$$
$$= \sum_{i,j} \sqrt{a_{mi}a_{mj}} \sum_{k} \kappa_{ijk} I_k \tag{23}$$

Equation (23) is equivalent to Equation (8), which has no diffraction, if:

$$\kappa_{ijk} = \begin{cases} \kappa_{kkk}, & \text{if } i = j = k \\ 0, & \text{otherwise} \end{cases} \tag{24}$$

In general, Equation (23) demonstrates that there is a blurring due to diffraction. Equation (23) can be written in matrix form. Let sensing matrix be $A \in \Re^{M \times N}$ and

$$A = \begin{bmatrix} a_1 \\ \vdots \\ a_M \end{bmatrix} \in \Re^{M \times N}, a_m \in \Re^{1 \times N}, m = 1, \dots, M \tag{25}$$

Now define two matrices:

$$\overline{A} = \begin{bmatrix} \sqrt{a_1} \otimes \sqrt{a_1} \\ \vdots \\ \sqrt{a_M} \otimes \sqrt{a_M} \end{bmatrix} \in \Re^{M \times N^2}, \sqrt{a_m} \otimes \sqrt{a_m} \in \Re^{1 \times N^2}, m = 1, \dots, M \tag{26}$$

$$H = \begin{bmatrix} h_{pk} \end{bmatrix} \in \Re^{N^2 \times N}, h_{q(i,j)k} = \kappa_{ijk}, i, j, k = 1, \dots, N$$

In (26), "$\otimes$" is the Kronecker product. Then equation (23) becomes

$$z = \overline{A} \cdot H \cdot I \tag{27}$$

In (27), the entries of $H$ are given by:

$$H = \left[ h_{pk} \right] \in \Re^{N^2 \times N}$$

$$h_{q(q(i,j),q(k,l)),q(p,r)} = \kappa_{q(i,j)q(k,l),q(p,r)} = \kappa(i,j,k,l,p,r)$$

$$= \iint_{E_{ij}} du dv \iint_{E_{kl}} ds dt \iint_{E_{pr}} K(x,y,u,v)K^*(x,y,s,t) dx dy$$

$$K(x,y,u,v) = \frac{\gamma\sqrt{f^2+x^2+y^2}\, e^{ik_0\left(\sqrt{f^2+u^2+v^2}+\sqrt{F^2+(\gamma x-u)^2+(\gamma y-v)^2}\right)}}{2\left(f^2+u^2+v^2\right)\left(F^2+(\gamma x-u)^2+(\gamma y-v)^2\right)}$$

$$\cdot\left( f\sqrt{F^2+(\gamma x-u)^2+(\gamma y-v)^2} + F\sqrt{f^2+u^2+v^2} \right)$$

$$\gamma = \frac{F+f}{f}$$

$$k_0 = \frac{2\pi}{\lambda}$$

(28)

$\lambda$ = wave length of monochromatic light

Matrix H has the form

$$H = \begin{bmatrix} \begin{bmatrix} \kappa_{111} & \kappa_{112} & \cdots & \kappa_{11N} \\ \kappa_{121} & \kappa_{122} & \cdots & \kappa_{12N} \\ \vdots & \vdots & \ddots & \vdots \\ \kappa_{1N1} & \kappa_{1N2} & \cdots & \kappa_{1NN} \end{bmatrix}_{N \times N} \\ \vdots \\ \begin{bmatrix} \kappa_{N11} & \kappa_{N12} & \cdots & \kappa_{N1N} \\ \kappa_{N21} & \kappa_{N22} & \cdots & \kappa_{N2N} \\ \vdots & \vdots & \ddots & \vdots \\ \kappa_{NN1} & \kappa_{NN2} & \cdots & \kappa_{NNN} \end{bmatrix}_{N \times N} \end{bmatrix}_{N^2 \times N}$$

(29)

Equation (27) is equal to non-blurred (no diffraction) measurements

$$z = A \cdot I ,$$

(30)

if H happens to be

$$H = \begin{bmatrix} \begin{bmatrix} \kappa_{111} & 0 & 0 & \cdots & 0 \\ 0 & 0 & 0 & \cdots & 0 \\ \vdots & \vdots & \vdots & \cdots & \vdots \\ 0 & 0 & 0 & \cdots & 0 \end{bmatrix}_{N \times N} \\ \begin{bmatrix} 0 & 0 & 0 & \cdots & 0 \\ 0 & \kappa_{222} & 0 & \cdots & 0 \\ \vdots & \vdots & \vdots & \cdots & \vdots \\ 0 & 0 & 0 & \cdots & 0 \end{bmatrix}_{N \times N} \\ \vdots \\ \begin{bmatrix} 0 & 0 & \cdots & 0 & 0 \\ \vdots & \vdots & \cdots & \vdots & \vdots \\ 0 & 0 & \cdots & 0 & 0 \\ 0 & 0 & \cdots & 0 & \kappa_{NNN} \end{bmatrix}_{N \times N} \end{bmatrix}_{N^2 \times N} \qquad (31)$$

Next, the quantities in Equation (28) are made dimensionless. We will make the size of aperture elements in the unit of wavelength $\lambda$, and also scale all quantities by the size of the elements. Define $E^0$ to be the square root of the area of each element of the aperture:

$$E^0 = \sqrt{\text{area}(E_{ij})} \qquad (32)$$

For purposes of the following description the elements are squares, and $E^0$ is the length of a side of an element. However, this is not seen as limiting and the elements may be any other suitable shape in which case the equations may be adjusted accordingly. Now make the aperture elements in the unit of the wavelength, i.e., scale $E^0$ by $\lambda$:

$$E_\lambda = \frac{E^0}{\lambda} = \frac{\sqrt{\text{area}(E_{ij})}}{\lambda} \qquad (33)$$

We now scale the variables in (28) by $E^0$ and obtain the mixing matrix H as follows.

$$H = \left[ h_{pk} \right] \in \Re^{N^2 \times N}$$

$$h_{q(q(i,j),q(k,l)),q(p,r)} = \kappa_{q(i,j)q(k,l),q(p,r)} = \kappa(i,j,k,l,p,r)$$

$$= \iint_{E_{ij}^0} dudv \iint_{E_{kl}^0} dsdt \iint_{E_{pr}^0} K_E(x,y,u,v) K_E^*(x,y,s,t)dxdy$$

$$K_E(x,y,u,v) = \frac{\gamma \sqrt{f_E^2 + x^2 + y^2}\, e^{i2\pi E_\lambda \left( \sqrt{f_E^2+u^2+v^2} + \sqrt{F_E^2+(\gamma x - u)^2 + (\gamma y - v)^2} \right)}}{2\left( f_E^2 + u^2 + v^2 \right)\left( F_E^2 + (\gamma x - u)^2 + (\gamma y - v)^2 \right)}$$

$$\cdot \left( f_E \sqrt{F_E^2 + (\gamma x - u)^2 + (\gamma y - v)^2} + F_E \sqrt{f_E^2 + u^2 + v^2} \right)$$

$$f_E = \frac{f}{E^0}, F_E = \frac{F}{E^0}, \gamma = \frac{F+f}{f}$$

$$E_{ij}^0 = \frac{E_{ij}}{\left(E^0\right)^2} = \text{region of } E_{ij} \text{ which has unit area}$$

$$(34)$$

Note in Equation (34), the wavelength $\lambda$ is not needed. All quantities are dimensionless. The integrations are over the aperture whose elements have unit area. Distances $f_E, F_E$ are given in the unit of E which is the side length of the aperture element. The length of the aperture element is given in the unit of wavelength as $E_\lambda$.

Compared to Equation (8), Equation (27) more accurately describes the relationship between the measurements and the pixels of the image by taking into consideration of the diffraction effect. In other words, instead of solving the ideal Equation (8), it is possible to use Equation (27) instead so that the reconstructed image has no blurring due to diffraction. However, Equation (27) is very complex, and difficult to compute and to solve. Therefore, a simpler equation, yet still accurate in the presence of diffraction, is needed.

### Remedy for Diffraction Effect

Let $T(u,v)$ define an aperture pattern and $T^c(u,v)$ be its complementary, i.e.,

$$T^c(u,v) = \left( 1 - \sqrt{T(u,v)} \right)^2$$

$$(35)$$

Then we have

$$\sqrt{T(u,v)} + \sqrt{T^c(u,v)} \equiv 1$$

$$(36)$$

From (12), the wave amplitudes at the sensor with the aperture patterns $T(u,v)$, $T^c(u,v)$ are given by, respectively,

$$\psi(x,y) = \iint_E \varphi_T(x,y,u,v)dudv, \quad \psi^c(x,y) = \iint_E \varphi_{T^c}(x,y,u,v)dudv$$

$$(37)$$

where

$$\varphi_T(x,y,u,v) = \sqrt{T(u,v)} \frac{-ik_0 a(x,y)}{2\pi d(x,y)} K(x,y,u,v),$$

$$\varphi_{T^c}(x,y,u,v) = \sqrt{T^c(u,v)} \frac{-ik_0 a(x,y)}{2\pi d(x,y)} K(x,y,u,v)$$

$$(38)$$

and $K(x,y,u,v)$ is given in Equation (13).

Referring again to FIG. 5, $\varphi_T(x,y,u,v)$ is the wave amplitude reaching the sensor S from point source $P$ , via the point $U$ on the aperture, when the aperture pattern is $T(x,y)$ . $\varphi_T(x,y,u,v)$ is the wave amplitude reaching the sensor $S$ from point source $P$, via the point $U$ on the aperture, when the aperture pattern is $T^c(x,y)$.

Adding $\psi(x,y)$ and $\psi^c(x,y)$ of Equation (37), we have

$$
\begin{aligned}
\psi(x,y) + \psi^c(x,y) &= \iint_E \left( \varphi_T(x,y,u,v) + \varphi_{T^c}(x,y,u,v) \right) dudv \\
&\frac{-ik_0 a(x,y)}{2\pi d(x,y)} \iint_E \left( \sqrt{T(u,v)} + \sqrt{T^c(u,v)} \right) K(x,y,u,v) dudv \\
&= \frac{-ik_0 a(x,y)}{2\pi d(x,y)} \iint_E K(x,y,u,v) dudv \\
&= \upsilon(x,y)
\end{aligned}
\tag{39}
$$

In Equation (39), $\upsilon(x,y)$ is the wave amplitude when the entire aperture is open, and it is given by:

$$
\upsilon(x,y) = \frac{-ik_0 a(x,y)}{2\pi d(x,y)} \iint_E K(x,y,u,v) dudv
\tag{40}
$$

Now

$$
\left| \psi(x,y) \right|^2 - \left| \psi^c(x,y) \right|^2 = \mathrm{Re}\left( \left( \psi(x,y) + \psi^c(x,y) \right)^* \left( \psi(x,y) - \psi^c(x,y) \right) \right)
\tag{41}
$$

Subtracting Equation (42) into Equation (41), we have

$$
\left| \psi(x,y) \right|^2 - \left| \psi^c(x,y) \right|^2 = \mathrm{Re}\left( \upsilon^*(x,y) \left( \psi(x,y) - \psi^c(x,y) \right) \right)
\tag{43}
$$

From Equation (38) and Equation (40)

$$
\begin{aligned}
&\left| \psi(x,y) \right|^2 - \left| \psi^c(x,y) \right|^2 \\
&= \mathrm{Re}\left( \frac{ik_0 a_P}{2\pi d(x,y)} \iint_E K^* dudv \iint_E \left( \sqrt{T(u,v)} - \sqrt{T^c(u,v)} \right) \frac{-ik_0 a(x,y)}{2\pi d(x,y)} K dudv \right) \\
&= \mathrm{Re}\left( -\left( \frac{ik_0 a_P}{2\pi d(x,y)} \right)^2 \iint_E K^* dudv \iint_E \left( \sqrt{T(u,v)} - \sqrt{T^c(u,v)} \right) K(x,y,u,v) dudv \right) \\
&= I(x,y) \mathrm{Re}\left( \iint_E K^*(x,y,u,v) dudv \iint_E \left( \sqrt{T(u,v)} - \sqrt{T^c(u,v)} \right) K(x,y,u,v) dudv \right)
\end{aligned}
\tag{44}
$$

Comparing Equations (44) and (16), Equation (44) is much simpler because one of the factors in the last line of, i.e., the integral

$$
\iint_E K^*(x,y,u,v) dudv
\tag{45}
$$

is not a function of the aperture pattern $T(x,y)$, and it can be computed explicitly, for example, as discussed below with reference to Equations (65). More specifically, while $|\psi(x,y)|^2$ depends nonlinearly on $\sqrt{T(u,v)}$, $|\psi(x,y)|^2 - |\psi^c(x,y)|^2$ depends linearly on $\sqrt{T(u,v)}$ and $\sqrt{T^c(u,v)}$. In other words, Equation (44) avoids the pattern-pattern interaction term of

$$\iint_E \sqrt{T(s,t)}K^*(x,y,s,t)dsdt\iint_E \sqrt{T(u,v)}K(x,y,u,v)dudv. \tag{46}$$

The difference of the measurements from complementary patterns is given by:

$$z_T - z_{T^c} = \mathrm{Re}\iint_E I(x,y)dxdy\iint_E K^*dudv\iint_E\left(\sqrt{T(u,v)} - \sqrt{T^c(u,v)}\right)K(x,y,u,v)dudv$$

$$= \mathrm{Re}\sum_{p,r}\iint_{E_{pr}} I(x,y)dxdy\iint_E K^*dudv\iint_E\left(\sqrt{T(u,v)} - \sqrt{T^c(u,v)}\right)K(x,y,u,v)dudv \tag{47}$$

$$= \mathrm{Re}\sum_{(p,r),(j,k)}\iint_{E_{pr}} I(x,y)dxdy\iint_E K^*dudv\iint_{E_{jk}}\left(\sqrt{T(u,v)} - \sqrt{T^c(u,v)}\right)K(x,y,u,v)dudv$$

Let $z_m$ be a measurement from row $m$ of the sensing matrix $A$ and $z_m^c$ be the corresponding measurement from the complementary matrix $A^c$, whose entries are given by:

$$a_{ij}^c = \left(1 - \sqrt{a_{ij}}\right)^2 \tag{48}$$

Following the treatment of Equation (23), we have:

$$z_m - z_m^c = \mathrm{Re}\sum_{k,j}\iint_{E_k} I(x,y)dxdy\iint_E K^*dudv\iint_{E_j}\left(\sqrt{T} - \sqrt{T^c}\right)Kdudv$$

$$= \mathrm{Re}\sum_{k,j}\iint_{E_k} I(x,y)dxdy\iint_E K^*dudv\iint_{E_j}\left(\sqrt{a_{mj}} - \sqrt{a_{mj}^c}\right)Kdudv$$

$$= \mathrm{Re}\sum_{k,j} I_k\left(\sqrt{a_{mj}} - \sqrt{a_{mj}^c}\right)\iint_{E_k} dxdy\iint_E K^*dudv\iint_{E_j} Kdudv \tag{49}$$

$$= \sum_k\left(\sum_j\left(\sqrt{a_{mj}} - \sqrt{a_{mj}^c}\right)\tau_{jk}\right)I_k$$

$$= \sum_j\left(\sqrt{a_{mj}} - \sqrt{a_{mj}^c}\right)\sum_k \tau_{jk}I_k$$

where

$$\tau_{jk} = \mathrm{Re}\iint_{E_k} dxdy\iint_E K^*(x,y,u,v)dudv\iint_{E_j} K(x,y,u,v)dudv \tag{50}$$

Note that:

$$\sum_j \tau_{jk} = \text{Re} \iint_{E_k} dxdy \iint_E K^*(x,y,u,v)dudv \sum_j \iint_{E_j} K(x,y,u,v)dudv$$

$$= \text{Re} \iint_{E_k} dxdy \iint_E K^*(x,y,u,v)dudv \iint_E K(x,y,u,v)dudv \qquad (51)$$

$$= \iint_{E_k} \left| \iint_E K(x,y,u,v)dudv \right|^2 dxdy$$

Define matrix $\Gamma \in \mathfrak{R}^{N \times N}$ by:

$$\Gamma_{jk} = \tau_{jk} \qquad (52)$$

In matrix form, Equation (49) becomes:

$$z - z^c = \left( \sqrt{A} - \sqrt{A^c} \right) \cdot \Gamma \cdot I \qquad (53)$$

where

$$\sqrt{A} \in \mathfrak{R}^{N \times N}, \quad \left( \sqrt{A} \right)_{ij} = \sqrt{a_{ij}} \qquad (54)$$

If we select

$$\sqrt{a_{mk}} = a_{mk} , \qquad (55)$$

for example, with values of 0 and 1, then, in matrix form, Equation (49) becomes:

$$z - z^c = \left( A - A^c \right) \cdot \Gamma \cdot I \qquad (56)$$

If matrix $\Gamma$ is identity matrix, then no diffraction is present, and therefore, as we expected,

$$z - z^c = \left( A - A^c \right) \cdot I \qquad (57)$$

which has no blurring. In general, the diffraction effect makes $\Gamma$ non-identity, and there is blurring.

Compared with Equation (27), Equation (56) an equally accurate relationship between the measurements and the pixels of the image. One advantage of Equation (56) over Equation (27) is that the former is simpler and much easily to compute and solve. Equation (56) can be well approximated by Equation (57) which is ideal when light is treated as straight rays without diffraction. Equation (57) can be computed and solved easily, which can be solved to reconstruct an image with a much reduced diffraction effect.

Since we have two sets of measurements, $z$ and $z^c$, we can have a second set of equations, in addition to Equation (56), which can be derived from Equation (41). From Equation (41), we have:

$$z_m - z_m^c = \iint_E \left( \left| \upsilon(x,y) \right|^2 - 2\operatorname{Re}\left( \upsilon^*(x,y)\psi^c(x,y) \right) \right) dxdy$$

$$= \iint_E \left| \upsilon(x,y) \right|^2 dxdy - 2\operatorname{Re} \iint_E \upsilon^*(x,y)\psi^c(x,y)dxdy$$

$$= \sum_k I_k - 2\operatorname{Re} \sum_{k,j} \iint_{E_k} I(x,y)dxdy \iint_E K^* dudv \iint_{E_j} \sqrt{a_{mj}^c} K dudv$$

$$= \sum_k I_k - 2\operatorname{Re} \sum_{k,j} I_k \sqrt{a_{mj}^c} \iint_{E_k} dxdy \iint_E K^* dudv \iint_{E_j} K dudv \qquad (58)$$

$$= \sum_k I_k - 2\sum_{k,j} I_k \sqrt{a_{mj}^c} \tau_{jk}$$

$$= \sum_{k,j} I_k \left( 1 - 2\sqrt{a_{mj}^c} \tau_{jk} \right)$$

Let $\Theta \in \mathfrak{R}^{N \times N}$ be the matrix whose entries are all 1's, and $I_{N \times N} \in \mathfrak{R}^{N \times N}$ be identity matrix

$$\Theta = \begin{bmatrix} 1 & \cdots & 1 \\ \vdots & \ddots & \vdots \\ 1 & \cdots & 1 \end{bmatrix}, \quad I_{N \times N} = \begin{bmatrix} 1 & \cdots & 0 \\ \vdots & \ddots & \vdots \\ 0 & \cdots & 1 \end{bmatrix} \qquad (59)$$

In matrix form, after combining Equations (56) and (58), we have two sets of independent equations

$$z - z^c = \left( A - A^c \right) \cdot \Gamma \cdot I$$
$$z - z^c = \left( \Theta - 2A^c \cdot \Gamma \right) \cdot I \qquad (60)$$

In the absence of noise, the two equations in (60) are the same. In the presence of errors in computing the matrix $\Gamma$, the combined equations further reduce noise.
Note that

$$A + A^c = \Theta \qquad (61)$$

Equation (60) can be rewritten as

$$\left( A - A^c \right) \cdot \Gamma \cdot I = z - z^c$$
$$\Theta \cdot \left( \Gamma - I_{N \times N} \right) \cdot I = 0 \qquad (62)$$

Or

$$\begin{bmatrix} \left( A - A^c \right) \cdot \Gamma \\ \Theta \cdot \left( \Gamma - I_{N \times N} \right) \end{bmatrix} \cdot I = \begin{bmatrix} z - z^c \\ 0 \end{bmatrix} \qquad (63)$$

In Fraunhofer diffraction, Babinet's principle states that the sum of the radiation patterns caused by two complementary bodies must be the same as the radiation pattern of the unobstructed beam. Based on this principle, diffraction effect can be much reduced by subtracting measurements from complementary aperture patterns.

Equation (43) can be considered as a generalized Babinet principle in the sense that it holds true in general, without any approximation model such as Fraunhofer model.

Note that in Equation (39), $\upsilon(x,y)$ is the wave amplitude reaching the sensor with the aperture $E$ completely open. Since the aperture $E$ is large enough, $\upsilon(x,y)$ can be considered as the wave amplitude reaching the sensor unobstructed (and hence without diffraction) from the point source, $P$, see FIG. 5. Therefore, Babinet's principle results in:

$$\upsilon(x,y) = \frac{-ik_0 a_P}{2\pi d(x,y)} e^{ik_0 d(x,y)} \tag{64}$$

That is, Babinet's principle yields

$$\iint_E K(x,y,u,v)dudv = e^{ik_0 d(x,y)} \tag{65}$$

By using the result of Babinet's principle, the matrix $\Gamma$ is easier to compute as given by:

$$\tau_{jk} = \text{Re} \iint_{E_k} \iint_{E_j} e^{-ik_0 d(x,y)} K(x,y,u,v)dudvdxdy \tag{66}$$

Note

$$\begin{aligned}
\sum_j \tau_{jk} &= \iint_{E_k} \left| \iint_E K(x,y,u,v)dudv \right|^2 dxdy \\
&= \iint_{E_k} \left| e^{-ik_0 d(x,y)} \right|^2 dxdy \\
&= |E_k| \\
&= const
\end{aligned} \tag{67}$$

As detailed above, the diffraction effect in compressive imaging can be well characterized under the scalar theory of diffraction, and this characterization allows, in theory at least, to reconstruct an image without any diffraction effect, and therefore, surpass the classic diffraction limit on the size of the aperture.

Babinet's principle can also be extended for Fraunhofer diffraction to the general scalar diffraction. More precisely, a formula has been derived for the difference of the intensity measurements of two complementary apertures. The difference in Equation (56) removes diffraction that is common in both complementary apertures, and hence reduces the amount of diffraction in the reconstruction process.

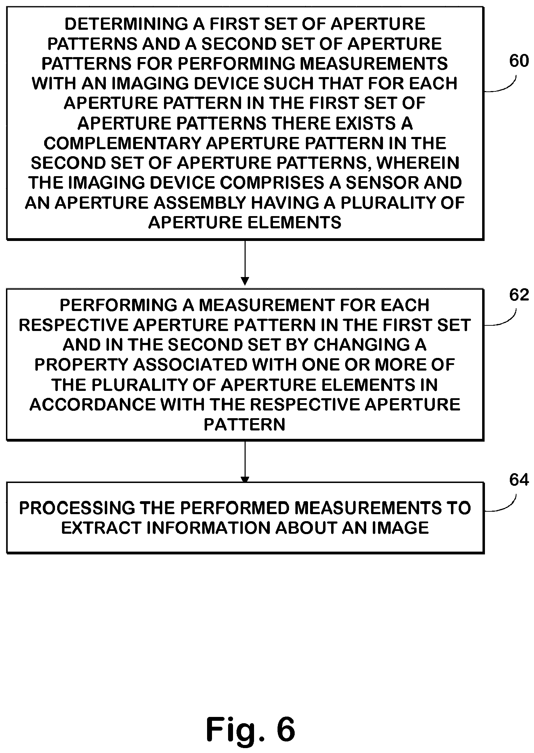

FIG. 6 is a logic flow diagram for using complementary apertures to reduce diffraction effect. This figure further illustrates the operation of an exemplary method or methods, a result of execution of computer program instructions embodied on a computer readable memory, functions performed by logic implemented in hardware, and/or interconnected means for performing functions in accordance with exemplary embodiments. For instance, the diffraction reduction module 140-1 and/or 140-2 may include multiples ones of the blocks in FIG. 6, where each included block is an interconnected means for performing the function in the block. The blocks in FIG. 6 are assumed to be performed by the system 100, e.g., under control of the diffraction reduction module 140-1 and/or 140-2 at least in part.

According to an example embodiment a method is provided including: determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements as indicated by block 60; performing a measurement for each respective aperture pattern in the first set and in the second set by changing a property associated with one or more of the plurality of aperture elements in accordance with the respective aperture pattern as indicated by block 62; and processing the performed measurements to extract information about an image as indicated by block 64.

The extracted information may correspond to pixels in the image. Processing the performed measurements may include setting up a system of equations to extract the information about the image. Processing the performed measurements may be based at least on the determined first set and second set of aperture patterns and a diffraction effect associated with the aperture assembly caused by the first set of patterns and the second set of aperture patterns. Changing the property associated with one or more of the plurality of aperture elements may include at least one of: changing a transmittance associated with one or more of the plurality of aperture elements; and changing a reflectance associated with one or more of the plurality of aperture elements. Determining the first set of aperture patterns may be based on a sensing matrix, wherein each row of the sensing matrix is associated with a different one of the aperture patterns of the first set, and wherein performing the measurement for a given aperture pattern in the first set comprises changing the property associated with the one or more of the plurality of aperture elements based on the values of the entries in the row corresponding to the given aperture pattern. Determining the second set of aperture patterns may be based on a complementary sensing matrix, wherein each row of the complementary sensing matrix is associated with a different one of the aperture patterns of the second set, and wherein the complementary aperture pattern associated with the $i^{th}$ row of the complementary sensing matrix corresponds to the aperture pattern associated with the $i^{th}$ row of the sensing matrix. Processing the performed measurements may include defining a first measurement vector comprising results of the measurements performed for the first set and defining a second measurement vector comprising results of the measurements for the second set. The measurements may correspond to an intensity of light reflected from an object detected at the sensor. The method may include constructing an image based on the extracted information, and outputting the image to at least one of: a display; a memory of device comprising the imaging system; a memory of at least one other device; and a printer.

According to another example embodiment, an apparatus (such as system 100 for example) includes at least one processor; and at least one non-transitory memory including computer program code, the at least one memory and the computer program code configured to, with the at least one processor, cause the apparatus at least to: determine a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements; perform a measurement for each respective aperture pattern in the first set and in the second set by changing a property associated with one or more of the plurality of aperture elements in accordance with the respective aperture pattern; and process the performed measurements to extract information about an image.

The extracted information may correspond to pixels in the image. Processing of the performed measurements may include setting up a system of equations to extract the information about the image. Processing of the performed measurements may be based at least on the determined first set and second set of aperture patterns and a diffraction effect associated with the aperture assembly caused by the first set of patterns and the second set of aperture patterns. Changing the property associated with one or more of the plurality of aperture elements may include at least one of: changing a transmittance associated with one or more of the plurality of aperture elements; and changing a reflectance associated with one or more of the plurality of aperture elements. Determination of the first set of aperture patterns may be based on a sensing matrix, wherein each row of the sensing matrix is associated with a different one of the aperture patterns of the first set, and wherein performance of the measurement for a given aperture pattern in the first set may include: changing the property associated with the one or more of the plurality of aperture elements based on the values of the entries in the row corresponding to the given aperture pattern. Determination of the second set of aperture patterns may be based on a complementary sensing matrix, wherein each row of the complementary sensing matrix is associated with a different one of the aperture patterns of the second set, and wherein the complementary aperture pattern associated with the $i^{th}$ row of the complementary sensing matrix corresponds to the aperture pattern associated with the $i^{th}$ row of the sensing matrix. Processing of the performed measurements may include defining a first measurement vector comprising results of the measurements performed for the first set and defining a second measurement vector comprising results of the measurements for the second set. The measurements may correspond to an intensity of light reflected from an object detected at the sensor. The at least one memory and the computer program code may be configured to, with the at least one processor, cause the apparatus further to constructs an image based on the extracted information, and outputting the image to at least one of: a display; a memory of device comprising the apparatus; a memory of at least one other device; and a printer.

According to another example embodiment, an apparatus comprises means for determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements; means for performing a measurement for each respective aperture pattern in the first set and in the second set by changing a property associated with one or more of the plurality of aperture elements in accordance with the respective aperture pattern; and means for processing the performed measurements to extract information about an image.

The extracted information may correspond to pixels in the image. Processing the performed measurements may include setting up a system of equations to extract the information about the image. Processing the performed measurements may be based at least on the determined first set and second set of aperture patterns and a diffraction effect associated with the aperture assembly caused by the first set of patterns and the second set of aperture patterns. Changing the property associated with one or more of the plurality of aperture elements may include at least one of: changing a transmittance associated with one or more of the plurality of aperture elements; and changing a reflectance associated with one or more of the plurality of aperture elements. Determining the first set of aperture patterns may be based on a sensing matrix, wherein each row of the sensing matrix is associated with a different one of the aperture patterns of the first set, and wherein performing the measurement for a given aperture pattern in the first set comprises changing the property associated with the one or more of the plurality of aperture elements based on the values of the entries in the row corresponding to the given aperture pattern. Determining the second set of aperture patterns may be based on a complementary sensing matrix, wherein each row of the complementary sensing matrix is associated with a different one of the aperture patterns of the second set, and wherein the complementary aperture pattern associated with the $i^{th}$ row of the complementary sensing matrix corresponds to the aperture pattern associated with the $i^{th}$ row of the sensing matrix. Processing the performed measurements may include defining a first measurement vector comprising results of the measurements performed for the first set and defining a second measurement vector comprising results of the measurements for the second set. The measurements may correspond to an intensity of light reflected from an object detected at the sensor. The apparatus may further include means for constructing an image based on the extracted information, and means for outputting the image to at least one of: a display; a memory of device comprising the imaging system; a memory of at least one other device; and a printer.

According to another example embodiment, a computer program product includes a computer-readable medium bearing computer program code embodied therein which when executed by a device, causes the device to perform: determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements; performing a measurement for each respective aperture pattern in the first set and in the second set by changing a property associated with one or more of the plurality of aperture elements in accordance with the respective aperture pattern; and processing the performed measurements to extract information about an image.

The extracted information may correspond to pixels in the image. Processing the performed measurements may include setting up a system of equations to extract the information about the image. Processing the performed measurements may be based at least on the determined first set and second set of aperture patterns and a diffraction effect associated with the aperture assembly caused by the first set of patterns and the second set of aperture patterns. Changing the property associated with one or more of the plurality of aperture elements may include at least one of: changing a transmittance associated with one or more of the plurality of aperture elements; and changing a reflectance associated with one or more of the plurality of aperture elements. Determining the first set of aperture patterns may be based on a sensing matrix, wherein each row of the sensing matrix is associated with a different one of the aperture patterns of the first set, and wherein performing the measurement for a given aperture pattern in the first set comprises changing the property associated with the one or more of the plurality of aperture elements based on the values of the entries in the row corresponding to the given aperture pattern. Determining the second set of aperture patterns may be based on a complementary sensing matrix, wherein each row of the complementary sensing matrix is associated with a different one of the aperture patterns of the second set, and wherein the complementary aperture pattern associated with the $i^{th}$ row of the complementary sensing matrix corresponds to the aperture pattern associated with the $i^{th}$ row of the sensing matrix. Processing the performed measurements may include defining a first measurement vector comprising results of the measurements performed for the first set and defining a second measurement vector comprising results of the measurements for the second set. The measurements may correspond to an intensity of light reflected from an object detected at the sensor. The computer program product may include a computer-readable medium bearing computer program code embodied therein which when executed by a device, causes the device to further perform: constructing an image based on the extracted information, and outputting the image to at least one of: a display; a memory of device comprising the imaging system; a memory of at least one other device; and a printer.

Without in any way limiting the scope, interpretation, or application of the claims appearing below, a technical effect of one or more of the example embodiments disclosed herein is removes or at least relaxes the diffraction limit which allows an optical system to: be smaller in size, be higher in resolution, have higher in image quality, and/or be more accurate.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 1. A computer-readable medium may comprise a computer-readable storage medium (e.g., memories 125) that may be any media or means that can contain, store, and/or transport the instructions for use by or in connection with an instruction execution system, apparatus, or device, such as a computer. A computer-readable storage medium does not comprise propagating signals.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

**Claims**

1.  A method comprising:

    determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements;
    performing a measurement for each respective aperture pattern in the first set and in the second set by changing a property associated with one or more of the plurality of aperture elements in accordance with the respective aperture pattern; and
    processing the performed measurements to extract information about an image.

2.  The method according to claim 1, wherein the extracted information corresponds to pixels in the image.

3.  The method according to claim 1 or 2, wherein processing the performed measurements comprises setting up a system of equations to extract the information about the image.

4.  The method according to any one of claims 1 - 3, wherein processing the performed measurements is based at least on the determined first set and second set of aperture patterns and a diffraction effect associated with the aperture assembly caused by the first set of patterns and the second set of aperture patterns.

5.  The method according to any one of claims 1 - 4, wherein changing the property associated with one or more of the plurality of aperture elements comprises at least one of:

    changing a transmittance associated with one or more of the plurality of aperture elements; and
    changing a reflectance associated with one or more of the plurality of aperture elements.

6.  An apparatus comprising:

    means for determining a first set of aperture patterns and a second set of aperture patterns for performing measurements with an imaging device such that for each aperture pattern in the first set of aperture patterns there exists a complementary aperture pattern in the second set of aperture patterns, wherein the imaging device comprises a sensor and an aperture assembly having a plurality of aperture elements;
    means for performing a measurement for each respective aperture pattern in the first set and in the second set by changing a property associated with one or more of the plurality of aperture elements in accordance with the respective aperture pattern; and
    means for processing the performed measurements to extract information about an image.

7.  The apparatus according to claim 6, wherein the extracted information corresponds to pixels in the image.

8.  The apparatus according to claim 6 or 7, wherein the means for processing the performed measurements comprises setting up a system of equations to extract the information about the image.

9. The apparatus according to any one of claims 6 - 8, wherein processing of the performed measurements is based at least on the determined first set and second set of aperture patterns and a diffraction effect associated with the aperture assembly caused by the first set of patterns and the second set of aperture patterns.

10. The apparatus according to any one of claims 6 - 9, wherein changing the property associated with one or more of the plurality of aperture elements comprises at least one of:

changing a transmittance associated with one or more of the plurality of aperture elements; and
changing a reflectance associated with one or more of the plurality of aperture elements.

11. The apparatus according to any one of claims 6 - 10, wherein determination of the first set of aperture patterns is based on a sensing matrix, wherein each row of the sensing matrix is associated with a different one of the aperture patterns of the first set, and wherein performance of the measurement for a given aperture pattern in the first set comprises:
changing the property associated with the one or more of the plurality of aperture elements based on the values of the entries in the row corresponding to the given aperture pattern.

12. The apparatus according to claim 11, wherein determination of the second set of aperture patterns is based on a complementary sensing matrix, wherein each row of the complementary sensing matrix is associated with a different one of the aperture patterns of the second set, and wherein the complementary aperture pattern associated with the $i^{th}$ row of the complementary sensing matrix corresponds to the aperture pattern associated with the $i^{th}$ row of the sensing matrix.

13. The apparatus according to any one of claims 6 - 12, wherein processing the performed measurements comprises defining a first measurement vector comprising results of the measurements performed for the first set and defining a second measurement vector comprising results of the measurements for the second set.

14. The apparatus according to any one of claims 6 - 13, wherein the measurements correspond to an intensity of light reflected from an object detected at the sensor.

15. A computer program product comprising a computer-readable medium bearing computer program code embodied therein which when executed by a device, causes the device to perform:
a method according to any one of claims 1-5.

**Fig. 1**

EP 3 496 392 A1

SCENE PLANE

210    202

212

204

206

CONSTRUCTED DIGITAL
IMAGE, 208

214

Fig. 2

$$\begin{bmatrix} a_{11} & a_{12} & \cdots & a_{1N-1} & a_{N} \\ a_{21} & a_{11} & \cdots & a_{2N-1} & a_{2N} \\ \vdots & \vdots & \ddots & \vdots & \vdots \\ a_{M1} & a_{M2} & \cdots & a_{MN-1} & a_{MN} \end{bmatrix}$$

300

$$a_{ij} = 0,1$$

302

304

306

**Fig. 3**

APERTURE
ASSEMBLY, 206

$E_{ij}$

$(x, y)$

404

402

SCENE

SENSOR, 204

Fig. 4

EP 3 496 392 A1

Fig. 5

DETERMINING A FIRST SET OF APERTURE PATTERNS AND A SECOND SET OF APERTURE PATTERNS FOR PERFORMING MEASUREMENTS WITH AN IMAGING DEVICE SUCH THAT FOR EACH APERTURE PATTERN IN THE FIRST SET OF APERTURE PATTERNS THERE EXISTS A COMPLEMENTARY APERTURE PATTERN IN THE SECOND SET OF APERTURE PATTERNS, WHEREIN THE IMAGING DEVICE COMPRISES A SENSOR AND AN APERTURE ASSEMBLY HAVING A PLURALITY OF APERTURE ELEMENTS

60

PERFORMING A MEASUREMENT FOR EACH RESPECTIVE APERTURE PATTERN IN THE FIRST SET AND IN THE SECOND SET BY CHANGING A PROPERTY ASSOCIATED WITH ONE OR MORE OF THE PLURALITY OF APERTURE ELEMENTS IN ACCORDANCE WITH THE RESPECTIVE APERTURE PATTERN

62

PROCESSING THE PERFORMED MEASUREMENTS TO EXTRACT INFORMATION ABOUT AN IMAGE

64

# Fig. 6

Europäisches
Patentamt

European
Patent Office

Office européen
des brevets

# EUROPEAN SEARCH REPORT

Application Number

EP 18 19 6240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2002/075990 A1 (LANZA RICHARD C [US] ET AL) 20 June 2002 (2002-06-20)<br>* paragraphs [0005] - [0017]; figures 1, 2A, 2B, * | 1-3,5-8, 10-15<br>4,9 | INV.<br>H04N5/335<br>H04N5/357<br>H04N5/225<br>G01T1/29 |
| X<br>Y | US 5 606 165 A (CHIOU WALTER C [US] ET AL) 25 February 1997 (1997-02-25)<br>* abstract; claims 1, 2; figures 5-9 * | 1-3,5-8, 10-15<br>4,9 | |
| X<br>Y | US 2014/267818 A1 (PERLMAN STEPHEN G [US]) 18 September 2014 (2014-09-18)<br>* paragraphs [0067] - [0069]; figures 3, 5-10 * | 1,6,15<br>4,9 | |
| X | EP 2 903 258 A1 (FUJIFILM CORP [JP]) 5 August 2015 (2015-08-05)<br>* paragraphs [0073] - [0079]; figures 7A-7C * | 1,6,15 | |
| X | WO 98/46007 A1 (COMMW SCIENT IND RES ORG [AU]; BONE DONALD JAMES [AU]) 15 October 1998 (1998-10-15)<br>* page 2 - page 4 *<br>* page 8, line 14 - page 9, line 14 * | 1,6,15 | TECHNICAL FIELDS SEARCHED (IPC)<br><br>H04N<br>G01V<br>G01T |

The present search report has been drawn up for all claims

| Place of search | Date of completion of the search | Examiner |
|---|---|---|
| Munich | 19 March 2019 | Trimeche, Mejdi |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 19 6240

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2019

| Patent document cited in search report | | Publication date | Patent family member(s) | | Publication date |
|---|---|---|---|---|---|
| US 2002075990 | A1 | 20-06-2002 | US 2002075990 A1 | | 20-06-2002 |
| | | | WO 02056055 A2 | | 18-07-2002 |
| US 5606165 | A | 25-02-1997 | AT 243327 T | | 15-07-2003 |
| | | | AU 1827697 A | | 11-08-1997 |
| | | | CA 2242992 A1 | | 24-07-1997 |
| | | | DE 69722938 D1 | | 24-07-2003 |
| | | | DE 69722938 T2 | | 19-05-2004 |
| | | | EA 199800639 A1 | | 24-12-1998 |
| | | | EP 0920643 A1 | | 09-06-1999 |
| | | | ES 2205174 T3 | | 01-05-2004 |
| | | | IL 125360 A | | 14-06-2001 |
| | | | IN 191992 B | | 07-02-2004 |
| | | | JP 3919222 B2 | | 23-05-2007 |
| | | | JP 2000503393 A | | 21-03-2000 |
| | | | JP 2006227024 A | | 31-08-2006 |
| | | | KR 100388577 B1 | | 19-08-2003 |
| | | | TW 340909 B | | 21-09-1998 |
| | | | US 5606165 A | | 25-02-1997 |
| | | | WO 9726557 A1 | | 24-07-1997 |
| | | | ZA 9700325 B | | 09-03-1998 |
| US 2014267818 | A1 | 18-09-2014 | GB 2527969 A | | 06-01-2016 |
| | | | TW 201500773 A | | 01-01-2015 |
| | | | US 2014267818 A1 | | 18-09-2014 |
| | | | WO 2014165294 A2 | | 09-10-2014 |
| EP 2903258 | A1 | 05-08-2015 | EP 2903258 A1 | | 05-08-2015 |
| | | | JP 5756572 B2 | | 29-07-2015 |
| | | | JP WO2014050699 A1 | | 22-08-2016 |
| | | | US 2015201143 A1 | | 16-07-2015 |
| | | | WO 2014050699 A1 | | 03-04-2014 |
| WO 9846007 | A1 | 15-10-1998 | NONE | | |

EPO FORM P0459

For more details about this annex : see Official Journal of the European Patent Office, No. 12/82

**EP 3 496 392 A1**

## REFERENCES CITED IN THE DESCRIPTION

**Patent documents cited in the description**

- US 9600899 B